# EUROPÄISCHE PATENTSCHRIFT

(11) **EP 3 270 167 B1**
(45) Veröffentlichungstag und Bekanntmachung des Hinweises auf die Patenterteilung: **24.10.2018**
(21) Anmeldenummer: 17180413.1
(22) Anmeldetag: 10.07.2017
(51) Int. Cl.: G01N 35/00, G01N 35/04, B25J 15/00, B25J 15/08, B25J 15/12

(54) **TRANSPORT VON FLÜSSIGKEITSBEHÄLTERN IN EINEM AUTOMATISCHEN ANALYSEGERÄT**
TRANSPORT OF LIQUID CONTAINERS IN AN AUTOMATIC ANALYZER
TRANSPORT DE RÉCIPIENTS DE LIQUIDES DANS UN APPAREIL D'ANALYSE AUTOMATIQUE

(30) Priorität: 11.07.2016 EP 16178767
(43) Veröffentlichungstag der Anmeldung: 17.01.2018
(73) Patentinhaber: Siemens Healthcare Diagnostics Products GmbH, 35041 Marburg (DE)
(72) Erfinder: Wiedekind-Klein, Alexander, 56812 Cochem (DE)

(56) Entgegenhaltungen:
- EP-A2- 2 308 588
- WO-A1-2015/111526
- DE-A1- 19 542 337
- JP-A- H02 152 790
- US-A- 5 772 962
- US-A1- 2011 150 609

## Beschreibung

Die vorliegende Erfindung liegt auf dem Gebiet der automatischen Analysegeräte und betrifft den Transfer von Flüssigkeitsbehältern mit Hilfe eines Klemmgreifers.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einer oder mehreren Reagenzflüssigkeiten in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den räumlichen Transfer von Flüssigkeitsbehältern sind häufig Klemmgreifer zum Erfassen, Halten und Freigeben eines Flüssigkeitsbehälters vorgesehen, die über ein flexibles Verbindungselement an einem horizontal und vertikal bewegbaren Transferarm befestigt sind. In der EP-A2-2308588 ist eine beispielhafte Vorrichtung zum Transfer von röhrchenförmigen Reaktionsgefäßen (Küvetten) innerhalb eines automatischen Analysegeräts beschrieben. Die Vorrichtung weist einen passiven, elastisch verformbaren Greifer mit zwei Greiferbeinen zum kraftschlüssigen Erfassen und Halten eines Flüssigkeitsbehälters auf und eignet sich, eine einzelne, in einer Aufnahmeposition platzierte Küvette aufzunehmen, diese an eine Zielposition zu transportieren und sie dort in einer weiteren Aufnahmeposition abzusetzen. Derartige passive Klemmgreifer haben gegenüber aktiven, mechanischen Greifern den Vorteil, dass sie durch ihre einfache Bauweise relativ robust sind und einen geringen Wartungsaufwand verursachen.

Im Wesentlichen umfasst der in der EP-A2-2308588 beschriebene Transport eines Flüssigkeitsbehälters mit dem Klemmgreifer die Schritte:
a) horizontales Verfahren des Klemmgreifers zur Herstellung einer Klemmverbindung zwischen dem Klemmgreifer und dem Flüssigkeitsbehälter in einer Startposition;
b) Anheben des Klemmgreifers zur Entnahme des Flüssigkeitsbehälters aus der Startposition;
c) horizontales Verfahren des Klemmgreifers an eine Zielposition;
d) Absenken des Klemmgreifers zur Positionierung des Flüssigkeitsbehälters in der Zielposition; und
e) horizontales Verfahren des Klemmgreifers zum Lösen der Klemmverbindung.

Zur Aufnahme oder mit anderen Worten zum Erfassen eines in einer Aufnahmeposition (Startposition) aufrecht stehenden Flüssigkeitsbehälters wird der Klemmgreifer durch eine horizontale Bewegung des Transferarms seitlich an den Flüssigkeitsbehälter herangeführt und gegen diesen gedrückt, bis sich der Klemmgreifer öffnet und den Flüssigkeitsbehälter kraftschlüssig umschließt. Durch eine Aufwärtsbewegung des Transferarms wird der vom Klemmgreifer gehaltene Flüssigkeitsbehälter aus der Aufnahmeposition gehoben und kann nun an eine beliebige Zielposition im Analysegerät, beispielsweise zu einer Aufnahmeposition in einer Messstation transportiert werden. Zur Abgabe oder mit anderen Worten zur Freigabe des Flüssigkeitsbehälters in der Zielposition wird der Flüssigkeitsbehälter zunächst durch eine Abwärtsbewegung des Transferarms in die Aufnahmeposition abgesenkt, und der Klemmgreifer wird durch eine horizontale Bewegung des Transferarms seitlich von dem Flüssigkeitsbehälter weggezogen. Dadurch wird der Flüssigkeitsbehälter gegen die Innenwand der Aufnahmeposition gedrückt und übt eine Kraft auf den Klemmgreifer aus, der sich schließlich bei weiterem Verfahren öffnet und den Flüssigkeitsbehälter freigibt.

Problematisch ist, dass es bei der Aufnahme und bei der Freigabe der Küvette durch das seitliche Herandrücken bzw. Wegziehen des Greifers passieren kann, dass Flüssigkeit aus der Küvette herausspritzt, weil die Küvette beim Herandrücken bzw. Wegziehen des Greifers in der Aufnahmeposition zunächst leicht kippen kann und dann, wenn der Greifer sich mit einer Schnapp-Bewegung öffnet, entgegen der Verfahrrichtung des Greifers beschleunigt wird und gegen die Innenwand der Aufnahmeposition schlägt. Verspritzende Flüssigkeit in dem Analysegerät kann dazu führen, dass Flüssigkeitsvolumen verloren geht, dass empfindliche Bauteile beschädigt werden, dass Spritzer in benachbarte Proben- oder Reaktionsgefäße gelangen und damit zur einer Verfälschung von Messergebnissen führen können und dass eine erhöhte Infektionsgefahr für einen Benutzer besteht, insbesondere dann, wenn die verspritzende Flüssigkeit menschliche oder tierische Körperflüssigkeiten, wie Blut oder Urin enthält.

Zur Vermeidung derartiger Störungen ist die Verwendung aktiver Greifsysteme bekannt. US-A-5772962 beschreibt eine Greifvorrichtung mit zwei Greiferbeinen, die über eine Zugfeder miteinander verbunden sind. Ferner ist eine Spreizvorrichtung vorgesehen, die die Greiferbeine auseinanderdrücken und dadurch den Greifmechanismus steuern kann.

Nachteilig ist allerdings der hohe Wartungsbedarf aktiver Greifsysteme, da die täglich hundert- bis zu tausendfache Benutzung zu einem raschen Verschleiß der mechanischen Teile führt.

Die der Erfindung zugrundeliegende Aufgabe besteht also darin, in einem automatischen Analysegerät mit einem passiven Klemmgreifer mit zwei Greiferbeinen zum Transport von Flüssigkeitsbehältern die automatische Platzierung von Flüssigkeitsbehältern in dafür vorgesehenen Aufnahmepositionen so zu verbessern, dass das Herausspritzen von Flüssigkeit vermieden wird, ohne dass mit der gefundenen Lösung ein übermäßiger Verschleiß bzw. Wartungsbedarf einhergeht.

Die Aufgabe wird erfindungsgemäß gelöst, indem an dem Klemmgreifer eine steuerbare Spreizvorrichtung vorgesehen ist, die in einer Aktivstellung eine Kraft auf die Greiferbeine ausübt, so dass die Greiferbeine auseinander gedrückt werden und die in einer Passivstellung keine Kraft auf die Greiferbeine ausübt und indem dieses "aktive" Greifsystem jedoch ausschließlich dann zum Einsatz gebracht wird, wenn ein Flüssigkeitsbehälter transferiert werden soll, der ein Flüssigkeitsvolumen enthält.

Dies hat den Vorteil, dass die Spreizvorrichtung bei der Aufnahme und/oder bei der Freigabe eines flüssigkeitsenthaltenden Flüssigkeitsbehälters betätigt werden kann, so dass die Klemmkraft des Greifers kurzzeitig verringert werden kann. Dies verhindert die Schnapp-Bewegung bei der Herstellung der Klemmverbindung zwischen Greifer und Flüssigkeitsbehälter und damit das Verspritzen von Flüssigkeit. Beim Transport eines leeren Flüssigkeitsbehälters, bei dem die Gefahr des Herausspritzens von Flüssigkeit gar nicht besteht, kann auf die aktive Betätigung der Spreizvorrichtung verzichtet und somit der Verschleiß der mechanischen Teile des Greifsystems vermindert werden.

Gegenstand der vorliegenden Erfindung ist also ein automatisches Analysegerät umfassend eine erste und eine zweite Aufnahmevorrichtung mit jeweils einer Vielzahl von Aufnahmepositionen für Flüssigkeitsbehälter und eine an einem automatisch verfahrbaren Transferarm befestigte Vorrichtung zum Transfer eines Flüssigkeitsbehälters von einer Aufnahmeposition an der ersten Aufnahmevorrichtung in eine Aufnahmeposition an der zweiten Aufnahmevorrichtung. Die Vorrichtung zum Transfer eines Flüssigkeitsbehälters umfasst einen passiven Klemmgreifer mit zwei Greiferbeinen, zwischen die durch eine horizontale Bewegung des Greifers ein Flüssigkeitsbehälter klemmbar ist. Der Klemmgreifer umfasst eine steuerbare Spreizvorrichtung, die in einer Aktivstellung eine Kraft auf die Greiferbeine ausübt, so dass die Greiferbeine auseinander gedrückt werden und die in einer Passivstellung keine Kraft auf die Greiferbeine ausübt.

Der zweibeinige Greifer kann einstückig und elastisch verformbar ausgestaltet sein und im Wesentlichen aus Kunststoff oder Metall bestehen. Der Greifer befindet sich vorzugsweise in einem Spannungszustand, so dass es, solange sich die Spreizvorrichtung in der Passivstellung befindet und wenn er mit ausreichender Kraft gegen einen Flüssigkeitsbehälter gedrückt wird, zu einem Schnappeffekt kommt, und der Greifer sich öffnet und den Flüssigkeitsbehälter umgreift und festhält. Umgekehrt öffnet sich der Greifer erst wieder und gibt den Flüssigkeitsbehälter frei, wenn der Greifer mit ausreichender Kraft von einem fixierten Flüssigkeitsbehälter wegbewegt wird.

Die Spreizvorrichtung ist steuerbar ausgestaltet. Sie kann einerseits eine Aktivstellung einnehmen, in welcher sie eine Kraft auf die Greiferbeine ausübt, so dass die Greiferbeine auseinander gedrückt werden und sich in einem Zustand verminderter Spannung befinden. Andererseits kann sie eine Passivstellung einnehmen, in der sie keine Kraft auf die Greiferbeine ausübt.

In einer Ausführungsform umfasst die Spreizvorrichtung eine Antriebswelle, die senkrecht zwischen die beiden Greiferbeine des Greifers ragt und an deren Ende ein stiftförmiger Spreizkopf vorgesehen ist, der in der Aktivstellung der Spreizvorrichtung in Bezug auf die beiden Greiferbeine quer gestellt ist und so eine Druckkraft auf die Greiferbeine ausübt, so dass die Greiferbeine auseinander gedrückt werden und der in der Passivstellung der Spreizvorrichtung in Bezug auf die beiden Greiferbeine längs gestellt ist und keine Kraft auf die Greiferbeine ausübt.

Zwischen den Greiferbeinen befindet sich vorzugsweise eine Öffnung oder ein Spalt, dessen Ausdehnung abgestimmt ist auf die Größe des zu transportierenden Flüssigkeitsbehälters. Die Länge des stiftförmigen Spreizkopfs ist vorzugsweise so gewählt, dass, wenn die Spreizvorrichtung in der Aktivstellung in Bezug auf die beiden Greiferbeine quer gestellt ist, die Enden des Spreizkopfs die Innenseiten der Greiferbeine berühren und so eine Druckkraft auf die Greiferbeine ausüben. Die Breite des stiftförmigen Spreizkopfs ist vorzugsweise so gewählt, dass, wenn die Spreizvorrichtung in der Passivstellung in Bezug auf die beiden Greiferbeine längs gestellt ist, kein Kontakt des Spreizkopfs mit den Innenseiten der Greiferbeine besteht, so dass keine Kraft auf die Greiferbeine ausgeübt wird.

Der Spreizkopf ist vorzugsweise über ein Verbindungselement mit dem Ende der Antriebswelle verbunden, beispielsweise über eine Verbindungsschraube. Alternativ kann das Ende der Antriebswelle als Schraubgewinde ausgebildet sein, auf das ein Spreizkopf mit einem passenden Innengewinde aufgeschraubt wird.

Der Spreizkopf kann im einfachsten Fall aus einem Stift aus Metall oder Kunststoff bestehen.

In einer bevorzugten Ausführungsform weist der Spreizkopf an seinen beiden Enden jeweils eine um eine senkrechte Achse drehbar gelagerte Rolle oder Kugel auf. Dies hat den Vorteil, dass die Reibungskräfte vermindert werden, die entstehen, wenn der Spreizkopf durch Drehung der Antriebswelle von der Passivstellung in die Aktivstellung gebracht wird und dabei die Greiferbeine auseinanderdrückt. Dies reduziert einerseits die Kraft, die notwendig ist, um die Antriebswelle zu bewegen. Andererseits verringert es den Verschleiß von Greiferbeinen, Spreizkopf und Antrieb der Antriebswelle. Die Rollen oder Kugeln können aus Hartgummi, Kunststoff oder Metall bestehen.

Die Antriebswelle ist vorzugsweise Teils eines Aktors, der von einer Steuereinheit ausgehende Befehle in mechanische Bewegung, insbesondere in eine Drehung der Antriebswelle um ihre Längsachse umsetzt. Der Aktor kann beispielsweise elektrisch oder pneumatisch angetrieben werden.

In einer anderen Ausführungsform umfasst die Spreizvorrichtung einen Stab, der senkrecht zwischen die beiden Greiferbeine des Greifers einführbar ist und an dessen Ende ein konusförmiger Spreizkopf vorgesehen ist, der in der Aktivstellung der Spreizvorrichtung so tief zwischen den Greiferbeinen eingeführt ist, dass er eine Druckkraft auf die Innenseiten der Greiferbeine ausübt, so dass die Greiferbeine auseinander gedrückt werden und der in der Passivstellung der Spreizvorrichtung die beiden Greiferbeine nicht berührt und keine Kraft auf die Greiferbeine ausübt.

Der Begriff "konusförmig" umfasst insbesondere kreiskegelförmige und kreiskegelstumpfförmige Geometrien des Spreizkopfes.

Das Ende des Stabes kann als Schraubgewinde ausgebildet sein, auf das der konusförmige Spreizkopf mit einem passenden Innengewinde aufgeschraubt wird.

Der konusförmige Spreizkopf kann im einfachsten Fall aus einem aus Metall, Kunststoff oder Hartgummi bestehen. Zur Reduzierung von Reibung und zur Reduzierung des Kraftaufwands beim Einführen des Spreizkopfes zwischen die Greiferbeine ist die Oberfläche vorzugsweise mit einem gleitfähigen Material, wie beispielsweise Teflon, beschichtet. Alternativ oder zusätzlich können an den sich verjüngenden Flanken des Spreizkopfes eine oder mehrere um jeweils eine horizontale Achse drehbar gelagerte Rollen oder Kugeln vorgesehen sein. Dies hat den Vorteil, dass die Reibungskräfte vermindert werden, die entstehen, wenn der Spreizkopf durch ein senkrechtes Verfahren des Stabes von der Passivstellung in die Aktivstellung gebracht wird und dabei die Greiferbeine auseinanderdrückt. Dies reduziert einerseits die Kraft, die notwendig ist, um den Stab zu bewegen. Andererseits verringert es den Verschleiß von Greiferbeinen, Spreizkopf und Antrieb des Stabes. Die Rollen oder Kugeln können aus Hartgummi, Kunststoff oder Metall bestehen.

Der Stab ist vorzugsweise Teils eines Aktors, der von einer Steuereinheit ausgehende Befehle in mechanische Bewegung, insbesondere in eine lineare Auf- und Abbewegung entlang der Längsachse des Stabes umsetzt. Der Aktor kann beispielsweise elektrisch oder pneumatisch angetrieben werden.

Umfasst die Spreizvorrichtung eine Antriebswelle, die senkrecht zwischen die beiden Greiferbeine des Greifers ragt und an deren Ende ein stiftförmiger Spreizkopf vorgesehen ist, wird die Spreizvorrichtung durch Drehen der Antriebswelle um 90 Grad von der Aktiv- in die Passivstellung und umgekehrt gebracht. Für den Wechsel von der Aktiv- in die Passivstellung und umgekehrt kann die Drehung entweder in 90 Grad-Schritten immer in eine Richtung erfolgen oder 90 Grad in eine Richtung und dann 90 Grad in die entgegensetzte Richtung.

Umfasst die Spreizvorrichtung einen Stab, der senkrecht zwischen die beiden Greiferbeine des Greifers einführbar ist und an dessen Ende ein konusförmiger Spreizkopf vorgesehen ist, wird die Spreizvorrichtung durch senkrechtes Absenken des Stabes von der Passiv- in die Aktivstellung gebracht. Für den Wechsel von der Aktiv- in die Passivstellung der Spreizvorrichtung wird der Stab senkrecht angehoben.

In einem bevorzugten automatischen Analysegerät ist der Klemmgreifer der Transfervorrichtung über ein flexibles Verbindungselement mit einem horizontal und vertikal bewegbaren Transferarm verbunden. Weiterhin bevorzugt ist die Spreizvorrichtung an demselben Transferarm befestigt.

Unter einer "Aufnahmeposition für einen Flüssigkeitsbehälter" ist ein Ort gemeint, der für die Platzierung eines Flüssigkeitsbehälters vorgesehen ist. Dabei handelt es sich häufig um eine baulich angepasste Aufnahmeposition, die eine standsichere Aufbewahrung des Flüssigkeitsbehälters ermöglicht, wie beispielsweise Hülsen, in die ein spezifisch ausgestalteter Flüssigkeitsbehälter formschlüssig eingeführt werden kann. In einem automatischen Analysegerät sind in erster Linie Aufnahmepositionen für Primärprobengefäße, Reaktionsgefäße (üblicherweise in Form von transparenten, röhrchenförmigen Küvetten) und für Reagenzflüssigkeitsbehälter vorgesehen. Die Aufnahmepositionen befinden sich an definierten Positionen, wie z.B. in beweglichen Aufnahmevorrichtungen, wie beispielsweise drehbaren Küvetten- oder Reagenztellern, oder stationären Vorratsbehältern.

Bei einem Flüssigkeitsbehälter kann es sich beispielsweise um ein Primärprobengefäß handeln, wie z.B. ein Blutentnahmeröhrchen, das eine zu analysierende Flüssigkeit enthält, oder um ein Reaktionsgefäß, wie z.B. eine transparente, röhrchenförmige Küvette, in dem eine Primärprobe mit dem oder den Reagenzien zu einem Reaktionsansatz vermischt wird, der dann in einer Messstation gemessen wird, oder um einen Reagenzflüssigkeitsbehälter, der eine Flüssigkeit, die ein oder mehrere Substanzen zum Nachweis eines oder mehrerer Analyten enthält. Der Reagenzflüssigkeitsbehälter kann ferner mehrkammrig ausgestaltet sein und mehrere, verschiedene Reagenzflüssigkeiten enthalten.

Ein erfindungsgemäßes automatisches Analysegerät umfasst ferner eine Steuervorrichtung, die so konfiguriert ist, dass sie ein Verfahren zum Transfer eines Flüssigkeitsbehälters mit den folgenden Schritten steuert:
- Prüfen, ob der zu transferierende Flüssigkeitsbehälter ein Flüssigkeitsvolumen enthält oder ob er leer ist; und
   a) wenn festgestellt wird, dass der zu transferierende Flüssigkeitsbehälter leer ist, der Transfer wie folgt durchgeführt wird:
      i) horizontales Verfahren der Transfervorrichtung zur Herstellung einer Klemmverbindung zwischen dem Klemmgreifer (11) und dem Flüssigkeitsbehälter in der Aufnahmeposition (4) der ersten Aufnahmevorrichtung (5) ;
      ii) Anheben der Transfervorrichtung zur Entnahme des Flüssigkeitsbehälters aus der Aufnahmeposition (4);
      iii) horizontales Verfahren der Transfervorrichtung an eine Aufnahmeposition (14) der zweiten Aufnahmevorrichtung (15);
      iv) Absenken der Transfervorrichtung zur Positionierung des Flüssigkeitsbehälters in die Aufnahmeposition (14) der zweiten Aufnahmevorrichtung (15); und
      v) horizontales Verfahren der Transfervorrichtung zum Lösen der Klemmverbindung;
         wobei sich während der Schritte a)i) bis a)v) die Spreizvorrichtung ausschließlich in der Passivstellung befindet; und
   b) wenn festgestellt wird, dass der zu transferierende Flüssigkeitsbehälter ein Flüssigkeitsvolumen enthält, der Transfer wie folgt durchgeführt wird:
      i) horizontales Verfahren der Transfervorrichtung zur Herstellung einer Klemmverbindung zwischen dem Klemmgreifer (11) und dem Flüssigkeitsbehälter in der Aufnahmeposition (4) der ersten Aufnahmevorrichtung (5), wobei vor der Herstellung der Klemmverbindung zwischen dem Klemmgreifer (11) und dem Flüssigkeitsbehälter die Spreizvorrichtung (50, 60) in die Aktivstellung gebracht wird, so dass sie eine Kraft auf die Greiferbeine (52, 62) ausübt und die Greiferbeine (52, 62) auseinander gedrückt werden;
      ii) Anheben der Transfervorrichtung zur Entnahme des Flüssigkeitsbehälters aus der Aufnahmeposition (4), wobei vor dem Anheben der Transfervorrichtung die Spreizvorrichtung (50, 60) in die Passivstellung gebracht wird, so dass sie keine Kraft auf die Greiferbeine (52, 62) ausübt;
      iii) horizontales Verfahren der Transfervorrichtung an eine Aufnahmeposition (14) der zweiten Aufnahmevorrichtung (15);
      iv) Absenken der Transfervorrichtung zur Positionierung des Flüssigkeitsbehälters in die Aufnahmeposition (14) der zweiten Aufnahmevorrichtung (15); und
      v) horizontales Verfahren der Transfervorrichtung zum Lösen der Klemmverbindung, wobei vor dem horizontalen Verfahren der Transfervorrichtung zum Lösen der Klemmverbindung die Spreizvorrichtung (50, 60) in die Aktivstellung gebracht wird, so dass sie eine Kraft auf die Greiferbeine (52, 62) ausübt und die Greiferbeine (52, 62) auseinander gedrückt werden.

Die Prüfung, ob der zu transferierende Flüssigkeitsbehälter ein Flüssigkeitsvolumen enthält oder ob er leer ist, kann auf verschiedene Art und Weise durchgeführt werden. Es kann zum Beispiel eine Kamera an der Transfervorrichtung vorgesehen sein, mit der kontrolliert wird, ob der zu transferierende Flüssigkeitsbehälter Flüssigkeit enthält oder nicht. Die Prüfung kann auch darin bestehen, dass die Steuervorrichtung Informationen aus einem Datenspeicher abruft, in dem der Befüllungszustand eines gegebenen Flüssigkeitsbehälters abgespeichert ist.

Die Vorteile der beschriebenen Erfindung und ihrer Ausführungsformen bestehen insbesondere darin, dass bereits bekannte passive Greifersysteme durch Anbringung einer Spreizvorrichtung optimiert werden können, ohne dass eine aufwändige Umgestaltung des Greifersystems per se vorgenommen werden müsste. Dadurch, dass die Spreizvorrichtung betätigt werden kann, um die Aufnahme und/oder Abgabe eines Flüssigkeitsbehälters zu verbessern, aber nicht notwendigerweise eingesetzt werden muss, kann die Spreizvorrichtung nach Bedarf zum Einsatz gebracht werden. So kann zum Beispiel beim Transfer von leeren Flüssigkeitsbehältern, bei dem nicht die Gefahr eines Verspritzens von Flüssigkeit besteht, auf einen aktiven Einsatz der Spreizvorrichtung verzichtet werden.

Die Erfindung wird im Folgenden anhand einer Zeichnung erläutert.

Darin zeigen
- FIG. 1: ein erfindungsgemäßes automatisches Analysegerät 1;
- FIG. 2: die Platzierung einer Küvette 300 gemäß dem Stand der Technik;
- FIG. 3: einen erfindungsgemäßen Klemmgreifer 11 mit einer Spreizvorrichtung 50;
- FIG. 4.: den stiftförmigen Spreizkopf 53 einer Spreizvorrichtung 50 von der Seite;
- FIG. 5: den stiftförmigen Spreizkopf 53 einer Spreizvorrichtung 50 von oben;
- FIG. 6: einen Klemmgreifer 11 mit einer Spreizvorrichtung 50 in Passivstellung;
- FIG. 7: einen Klemmgreifer 11 mit einer Spreizvorrichtung 50 in Aktivstellung;
- FIG. 8: eine Spreizvorrichtung 60 mit kegelstumpfförmigem Spreizkopf 63 in Passivstellung; und
- FIG. 9: eine Spreizvorrichtung 60 mit kegelstumpfförmigem Spreizkopf 63 in Aktivstellung.

Gleiche Teile sind in allen Figuren mit denselben Bezugszeichen versehen.

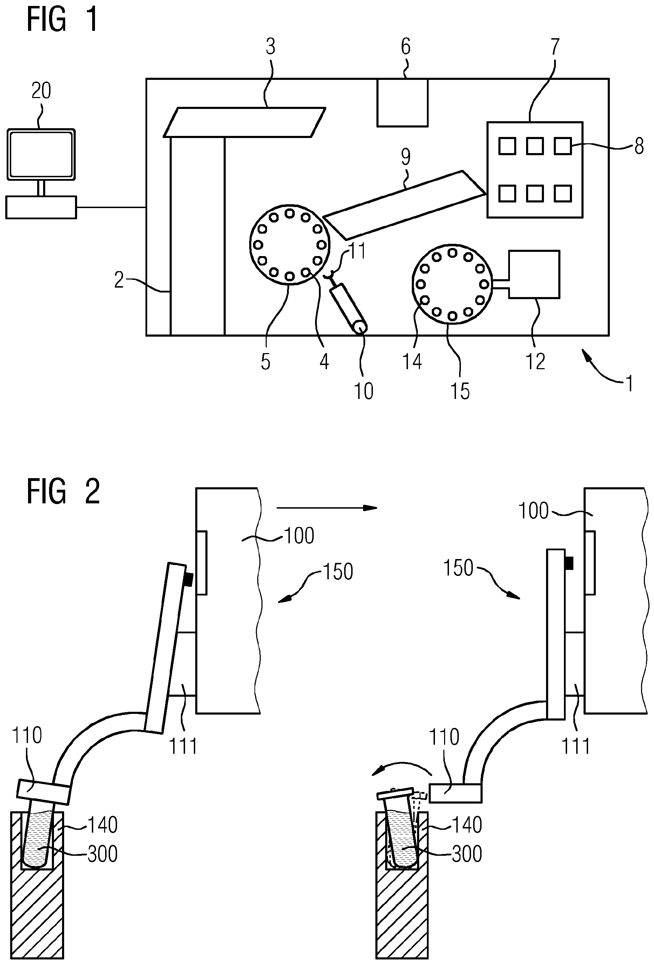

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette, die bereits ein Probenaliquot enthält, abgegeben. Die Küvette mit dem Reaktionsansatz wird von einem Transferarm 10 mit einem Klemmgreifer 11 mit einer nicht näher dargestellten Spreizvorrichtung von der Inkubationseinrichtung 5 in eine Aufnahmeposition 14 der drehbaren Aufnahmevorrichtung 15 für die photometrische Messstation 12 transportiert, wo die Extinktion des Reaktionsansatzes gemessen wird.

Vor der Herstellung der Klemmverbindung zwischen dem Klemmgreifer 11 und einer flüssigkeitsenthaltenden Küvette in einer Aufnahmeposition 4 wird die Spreizvorrichtung in die Aktivstellung gebracht, so dass sie die Greiferbeine des Klemmgreifers auseinanderdrückt. Vor dem Anheben des Klemmgreifers 11 wird die Spreizvorrichtung dann in die Passivstellung gebracht wird, so dass sie keine Kraft mehr auf die Greiferbeine ausübt und diese die volle Klemmkraft auf die Küvette ausüben. Nach dem Absenken des Klemmgreifers 11 zur Positionierung der Küvette in einer Aufnahmeposition 14 der Messstation 12 und vor dem horizontalen Verfahren des Klemmgreifers 11 zum Lösen der Klemmverbindung wird die Spreizvorrichtung in die Aktivstellung gebracht, so dass sie die Greiferbeine auseinanderdrückt. Dadurch wird beim Absetzen einer mit einem Reaktionsansatz befüllten Küvette ein in der Aufnahmeposition 14 auftretender Impuls der Küvette reduziert und so ein Herausspritzen der Flüssigkeit vermieden.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 ist eine schematische Darstellung der Platzierung einer Küvette 300 in einer Aufnahmeposition 140 in einem automatischen Analysegerät gemäß dem Stand der Technik. Die Vorrichtung 150 zum Transfer einer Küvette 300 umfasst einen horizontal und vertikal bewegbaren Transferarm 100 und einen mit dem Transferarm 100 verbundenen Greifer 110 zum Erfassen, Halten und Freigeben einer Küvette. Der Greifer 110 ist über ein flexibles Zwischenelement 111 mit dem Transferarm 100 verbunden.

Von links nach rechts wird gezeigt, wie das Absetzen der Küvette 300 in die Aufnahmeposition 140 im Stand der Technik verläuft. Nachdem die Küvette 300 zunächst durch eine Abwärtsbewegung des Transferarms 100 in die Aufnahmeposition 140 abgesenkt wurde, wird der Klemmgreifer 110 durch eine horizontale Bewegung des Transferarms 100 in Pfeilrichtung seitlich von der Küvette 300 weggezogen. Dadurch wird die Küvette 300 gegen die Innenwand der Aufnahmeposition 140 gedrückt und übt eine Kraft auf den Klemmgreifer 110 aus, der sich schließlich bei weiterem Verfahren öffnet und die Küvette 300 freigibt. Wie links dargestellt, kippt die Küvette 300 beim Wegziehen des Klemmgreifers 110 zunächst leicht und wird dann, wenn der Klemmgreifer 110 sich öffnet, wie rechts dargestellt, entgegen der Verfahrrichtung des Greifers 110 beschleunigt und schlägt gegen die Innenwand der Aufnahmeposition 140. Dabei besteht die Gefahr, dass Reaktionsflüssigkeit aus der Küvette 300 herausspritzt.

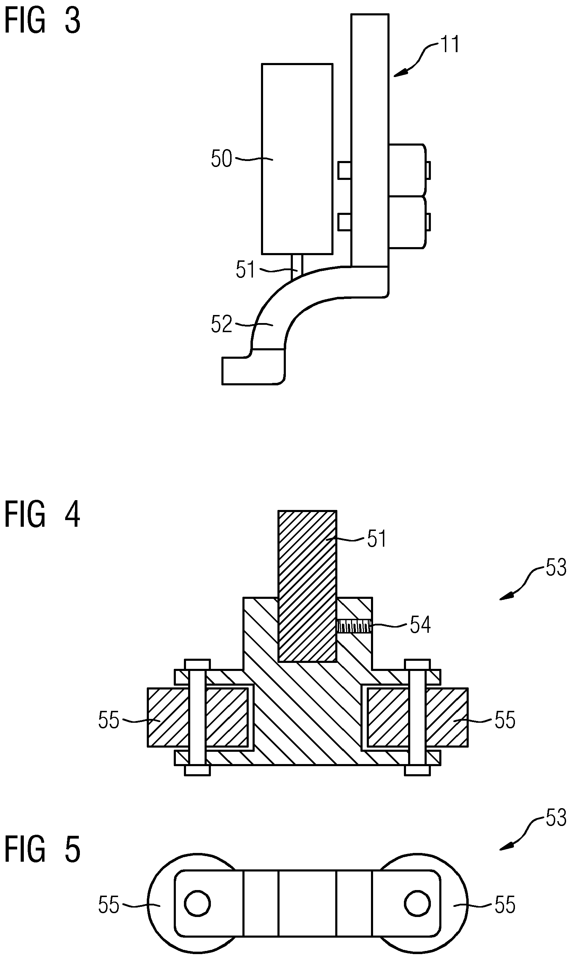

FIG. 3 ist eine seitliche Ansicht eines Klemmgreifers 11 mit einer Spreizvorrichtung 50. Die Antriebswelle 51 der Spreizvorrichtung 50 ragt zwischen die Greiferbeine 52.

FIG. 4 zeigt eine seitliche Ansicht und FIG. 5 zeigt eine Aufsicht eines Spreizkopfes 53 einer Spreizvorrichtung 50. Der Spreizkopf 53 ist mittels einer Schraube 54 am Ende der Antriebswelle 51 eines nicht näher dargestellten, elektrisch angetriebenen Aktors befestigt. An den beiden Enden des Spreizkopfes 53 ist jeweils eine drehbar gelagerte Rolle 55 aus Hartgummi vorgesehen.

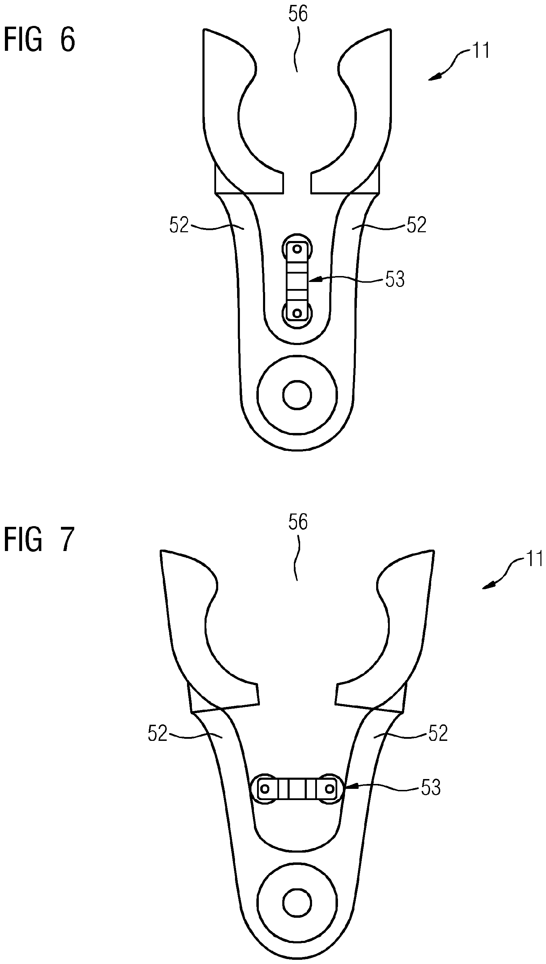

FIG. 6 zeigt eine Aufsicht eines Klemmgreifers 11 mit dem Spreizkopf 53 einer Spreizvorrichtung 50 in Passivstellung. Die Greiferbeine 52 des Klemmgreifers 11 stehen unter Spannung und bilden eine Öffnung 56 zum Einklemmen einer (nicht gezeigten) kreiszylindrischen Küvette. Der stiftförmige Spreizkopf 53 ist in Bezug auf die beiden Greiferbeine 52 längs gestellt, so dass kein Kontakt des Spreizkopfs 53 mit den Innenseiten der Greiferbeine 52 besteht, so dass keine Kraft auf die Greiferbeine 52 ausgeübt wird. Die Passivstellung, in der die Klemmkraft des Klemmgreifers 11 am höchsten ist, wird beispielsweise eingestellt, wenn sich eine Küvette in der Öffnung 56 befindet und horizontal oder vertikal transportiert wird.

FIG. 7 zeigt eine Aufsicht eines Klemmgreifers 11 mit dem Spreizkopf 53 einer Spreizvorrichtung 50 in Aktivstellung. Die Aktivstellung wird erreicht, in dem der Spreizkopf 53 um 90 Grad gedreht wird. Dadurch ist der Spreizkopf 53 in Bezug auf die beiden Greiferbeine 52 quer gestellt. Die Enden des Spreizkopfs 53 berühren die Innenseiten der Greiferbeine 52 und üben so eine Druckkraft auf die Greiferbeine 52 aus, die dadurch auseinander gedrückt werden. Dadurch wird die Öffnung 56 vergrößert, so dass die Kraft, die überwunden werden muss, um eine Küvette aufzunehmen oder freizugeben, vermindert ist. Die Aktivstellung, in der die Klemmkraft des Klemmgreifers 11 vermindert ist, wird beispielsweise eingestellt, wenn sich eine Küvette in der Öffnung 56 befindet und an einer Zielposition abgegeben werden soll und/oder wenn eine Küvette an einer Startposition in die Öffnung 56 eingeklemmt werden soll.

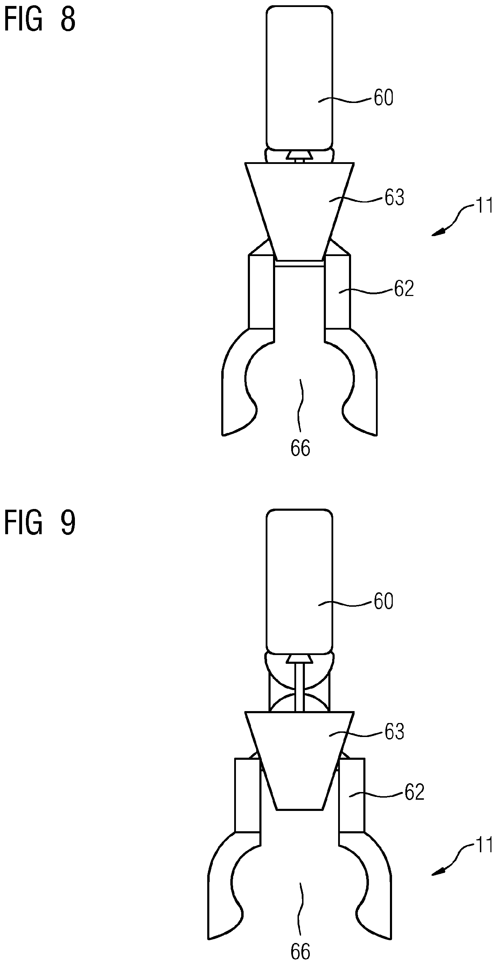

FIG. 8 und 9 zeigen eine Frontalansicht eines Klemmgreifers 11 mit dem Spreizkopf 63 einer Spreizvorrichtung 60 in Passivstellung (FIG. 8) und in Aktivstellung (FIG. 9). Zur Veranschaulichung sind die bogenförmigen Abschnitte der Greiferbeine 62 in einer etwas anderen Perspektive als der Rest der Vorrichtung dargestellt, nämlich vielmehr von oben als von vorne.

In der Passivstellung (FIG. 8) stehen die Greiferbeine 62 des Klemmgreifers 11 unter Spannung und bilden eine Öffnung 66 zum Einklemmen einer (nicht gezeigten) kreiszylindrischen Küvette. Der kegelstumpfförmige Spreizkopf 63 befindet sich oberhalb der beiden Greiferbeine 62, so dass kein Kontakt des Spreizkopfs 63 mit den Innenseiten der Greiferbeine 62 besteht, so dass keine Kraft auf die Greiferbeine 62 ausgeübt wird. Die Passivstellung, in der die Klemmkraft des Klemmgreifers 11 am höchsten ist, wird beispielsweise eingestellt, wenn sich eine Küvette in der Öffnung 66 befindet und horizontal oder vertikal transportiert wird.

Die Aktivstellung (siehe FIG. 9) wird erreicht, indem der Spreizkopf 63 senkrecht nach unten bewegt wird und zwischen die beiden Greiferbeine 62 des Klemmgreifers 11 eingeführt wird. Dadurch berühren die Mantelflächen des Kegelstumpfes die Innenseiten der Greiferbeine 62 und üben so eine Druckkraft auf die Greiferbeine 56 aus, die dadurch auseinander gedrückt werden. Dadurch wird die Öffnung 66 vergrößert, so dass die Kraft, die überwunden werden muss, um eine Küvette aufzunehmen oder freizugeben, vermindert ist. Die Aktivstellung, in der die Klemmkraft des Klemmgreifers 11 vermindert ist, wird beispielsweise eingestellt, wenn sich eine Küvette in der Öffnung 66 befindet und an einer Zielposition abgegeben werden soll und/oder wenn eine Küvette an einer Startposition in die Öffnung 66 eingeklemmt werden soll.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10, 100: Transferarm
- 11, 110: Klemmgreifer
- 12: Messstation
- 14, 140: Aufnahmeposition
- 15: Aufnahmevorrichtung
- 20: Steuereinheit
- 111: Zwischenelement
- 150: Transfervorrichtung
- 300: Küvette
- 50, 60: Spreizvorrichtung
- 51: Antriebswelle
- 52, 62: Greiferbein
- 53, 63: Spreizkopf
- 54: Schraube
- 55: Rolle
- 56, 66: Öffnung

## Patentansprüche

1. Automatisches Analysegerät (1) umfassend eine erste und eine zweite Aufnahmevorrichtung (5, 15) mit jeweils einer Vielzahl von Aufnahmepositionen (4, 14) für Flüssigkeitsbehälter und eine an einem automatisch verfahrbaren Transferarm (10) befestigte Vorrichtung zum Transfer eines Flüssigkeitsbehälters von einer Aufnahmeposition (4) an der ersten Aufnahmevorrichtung (5) in eine Aufnahmeposition (14) an der zweiten Aufnahmevorrichtung (15), wobei die Vorrichtung zum Transfer eines Flüssigkeitsbehälters einen passiven Klemmgreifer (11) mit zwei Greiferbeinen (52, 62), zwischen die durch eine horizontale Bewegung des Greifers (11) ein Flüssigkeitsbehälter klemmbar ist, umfasst und wobei der Klemmgreifer (11) ferner eine steuerbare Spreizvorrichtung (50, 60) umfasst, die in einer Aktivstellung eine Kraft auf die Greiferbeine (52, 62) ausübt, so dass die Greiferbeine (52, 62) auseinander gedrückt werden und die in einer Passivstellung keine Kraft auf die Greiferbeine (52, 62) ausübt, **dadurch gekennzeichnet, dass** das automatische Analysegerät (1) ferner eine Steuervorrichtung umfasst, die so konfiguriert ist, dass sie ein Verfahren mit den folgenden Schritten steuert:
• Prüfen, ob der zu transferierende Flüssigkeitsbehälter ein Flüssigkeitsvolumen enthält oder ob er leer ist; und
a) wenn festgestellt wird, dass der zu transferierende Flüssigkeitsbehälter leer ist, der Transfer wie folgt durchgeführt wird:
i) horizontales Verfahren der Transfervorrichtung zur Herstellung einer Klemmverbindung zwischen dem Klemmgreifer (11) und dem Flüssigkeitsbehälter in der Aufnahmeposition (4) der ersten Aufnahmevorrichtung (5) ;
ii) Anheben der Transfervorrichtung zur Entnahme des Flüssigkeitsbehälters aus der Aufnahmeposition (4);
iii) horizontales Verfahren der Transfervorrichtung an eine Aufnahmeposition (14) der zweiten Aufnahmevorrichtung (15);
iv) Absenken der Transfervorrichtung zur Positionierung des Flüssigkeitsbehälters in die Aufnahmeposition (14) der zweiten Aufnahmevorrichtung (15); und
v) horizontales Verfahren der Transfervorrichtung zum Lösen der Klemmverbindung;
wobei sich während der Schritte a)i) bis a)v) die Spreizvorrichtung ausschließlich in der Passivstellung befindet; und
b) wenn festgestellt wird, dass der zu transferierende Flüssigkeitsbehälter ein Flüssigkeitsvolumen enthält, der Transfer wie folgt durchgeführt wird:
i) horizontales Verfahren der Transfervorrichtung zur Herstellung einer Klemmverbindung zwischen dem Klemmgreifer (11) und dem Flüssigkeitsbehälter in der Aufnahmeposition (4) der ersten Aufnahmevorrichtung (5), wobei vor der Herstellung der Klemmverbindung zwischen dem Klemmgreifer (11) und dem Flüssigkeitsbehälter die Spreizvorrichtung (50, 60) in die Aktivstellung gebracht wird, so dass sie eine Kraft auf die Greiferbeine (52, 62) ausübt und die Greiferbeine (52, 62) auseinander gedrückt werden;
ii) Anheben der Transfervorrichtung zur Entnahme des Flüssigkeitsbehälters aus der Aufnahmeposition (4), wobei vor dem Anheben der Transfervorrichtung die Spreizvorrichtung (50, 60) in die Passivstellung gebracht wird, so dass sie keine Kraft auf die Greiferbeine (52, 62) ausübt;
iii) horizontales Verfahren der Transfervorrichtung an eine Aufnahmeposition (14) der zweiten Aufnahmevorrichtung (15);
iv) Absenken der Transfervorrichtung zur Positionierung des Flüssigkeitsbehälters in die Aufnahmeposition (14) der zweiten Aufnahmevorrichtung (15); und
v) horizontales Verfahren der Transfervorrichtung zum Lösen der Klemmverbindung, wobei vor dem horizontalen Verfahren der Transfervorrichtung zum Lösen der Klemmverbindung die Spreizvorrichtung (50, 60) in die Aktivstellung gebracht wird, so dass sie eine Kraft auf die Greiferbeine (52, 62) ausübt und die Greiferbeine (52, 62) auseinander gedrückt werden.

2. Automatisches Analysegerät (1) gemäß Anspruch 1, wobei die Spreizvorrichtung (50) eine Antriebswelle (51) umfasst, die senkrecht zwischen die beiden Greiferbeine (52) des Greifers (11) ragt und an deren Ende ein stiftförmiger Spreizkopf (53) vorgesehen ist, der in der Aktivstellung der Spreizvorrichtung (50) in Bezug auf die beiden Greiferbeine (52) quer gestellt ist und so eine Druckkraft auf die Greiferbeine (52) ausübt, so dass die Greiferbeine (52) auseinander gedrückt werden und der in der Passivstellung der Spreizvorrichtung (50) in Bezug auf die beiden Greiferbeine (52) längs gestellt ist und keine Kraft auf die Greiferbeine (52) ausübt.

3. Automatisches Analysegerät gemäß Anspruch 2, wobei der Spreizkopf (53) über ein Verbindungselement (54) mit dem Ende der Antriebswelle (51) verbunden ist.

4. Automatisches Analysegerät (1) gemäß einem der Ansprüche 2 und 3, wobei der Spreizkopf (53) an seinen beiden Enden jeweils eine um eine senkrechte Achse drehbar gelagerte Rolle (55) oder Kugel aufweist.

5. Automatisches Analysegerät (1) gemäß einem der Ansprüche 2 bis 4, wobei die Antriebswelle (51) Teil eines Aktors ist.

6. Automatisches Analysegerät (1) gemäß Anspruch 1, wobei die Spreizvorrichtung (60) einen Stab umfasst, der senkrecht zwischen die beiden Greiferbeine (62) des Greifers (11) einführbar ist und an dessen Ende ein konusförmiger Spreizkopf (63) vorgesehen ist, der in der Aktivstellung der Spreizvorrichtung (60) so tief zwischen den Greiferbeinen (62) eingeführt ist, dass er eine Druckkraft auf die Innenseiten der Greiferbeine (62) ausübt, so dass die Greiferbeine (62) auseinander gedrückt werden und der in der Passivstellung der Spreizvorrichtung (60) die beiden Greiferbeine (62) nicht berührt und keine Kraft auf die Greiferbeine (62) ausübt.

7. Automatisches Analysegerät (1) gemäß Anspruch 6, wobei der Spreizkopf (63) an den sich verjüngenden Flanken des Spreizkopfes (63) eine oder mehrere um jeweils eine horizontale Achse drehbar gelagerte Rollen oder Kugeln aufweist.

## Claims

1. Automated analyzer (1) comprising a first and a second receiving device (5, 15), each with a multiplicity of receiving positions (4, 14) for liquid containers, and a device, which is secured on an automatically movable transfer arm (10), for transferring a liquid container from a receiving position (4) on the first receiving device (5) to a receiving position (14) on the second receiving device (15), wherein the device for transferring a liquid container comprises a passive clamping gripper (11) with two gripper arms (52, 62), between which a liquid container can be clamped by a horizontal movement of the gripper (11), and wherein the clamping gripper (11) moreover comprises a controllable expansion device (50, 60) which, in an active position, exerts a force on the gripper arms (52, 62) such that the gripper arms (52, 62) are pressed away from each other, and which, in a passive position, does not exert a force on the gripper arms (52, 62), **characterized in that** the automated analyzer (1) moreover comprises a control device which is configured such that it controls a method with the following steps:
• checking whether the liquid container to be transferred contains a volume of liquid or is empty; and
a) if it is established that the liquid container to be transferred is empty, the transfer is carried out as follows:
i) moving the transfer device horizontally in order to produce a clamped connection between the clamping gripper (11) and the liquid container in the receiving position (4) of the first receiving device (5);
ii) raising the transfer device in order to remove the liquid container from the receiving position (4) ;
iii) moving the transfer device horizontally to a receiving position (14) of the second receiving device (15);
iv) lowering the transfer device in order to position the liquid container in the receiving position (14) of the second receiving device (15); and
v) moving the transfer device horizontally in order to release the clamped connection;
wherein the expansion device is located exclusively in the passive position during steps a)i) to a)v); and
b) if it is established that the liquid container to be transferred contains a volume of liquid, the transfer is carried out as follows:
i) moving the transfer device horizontally in order to produce a clamped connection between the clamping gripper (11) and the liquid container in the receiving position (4) of the first receiving device (5), wherein the expansion device (50, 60) is brought to the active position before the clamped connection is produced between the clamping gripper (11) and the liquid container, such that said expansion device (50, 60) exerts a force on the gripper arms (52, 62) and the gripper arms (52, 62) are pressed away from each other;
ii) raising the transfer device in order to remove the liquid container from the receiving position (4), wherein the expansion device (50, 60) is brought to the passive position before the transfer device is raised, such that said expansion device (50, 60) does not exert a force on the gripper arms (52, 62);
iii) moving the transfer device horizontally to a receiving position (14) of the second receiving device (15);
iv) lowering the transfer device in order to position the liquid container in the receiving position (14) of the second receiving device (15); and
v) moving the transfer device horizontally in order to release the clamped connection, wherein the expansion device (50, 60) is brought to the active position before the transfer device is moved horizontally to release the clamped connection, such that said expansion device (50, 60) exerts a force on the gripper arms (52, 62) and the gripper arms (52, 62) are pressed away from each other.

2. Automated analyzer (1) according to Claim 1, wherein the expansion device (50) comprises a drive shaft (51) which protrudes perpendicularly between the two gripper arms (52) of the gripper (11) and at the end of which a pin-shaped expansion head (53) is provided which, in the active position of the expansion device (50), is placed transversely in relation to the two gripper arms (52) and thus exerts a pressing force on the gripper arms (52) such that the gripper arms (52) are pressed away from each other, and which, in the passive position of the expansion device (50), is placed longitudinally in relation to the two gripper arms (52) and does not exert a force on the gripper arms (52).

3. Automated analyzer according to Claim 2, wherein the expansion head (53) is connected to the end of the drive shaft (51) via a connecting element (54).

4. Automated analyzer (1) according to either of Claims 2 and 3, wherein the expansion head (53) has, at each of its two ends, a roller (55) or ball mounted rotatably about a vertical axis.

5. Automated analyzer (1) according to one of Claims 2 through 4, wherein the drive shaft (51) is part of an actuator.

6. Automated analyzer (1) according to Claim 1, wherein the expansion device (60) comprises a rod which can be inserted perpendicularly between the two gripper arms (62) of the gripper (11) and at the end of which a cone-shaped expansion head (63) is provided which, in the active position of the expansion device (60), is inserted so deep between the gripper arms (62) that it exerts a pressing force on the inside faces of the gripper arms (62), such that the gripper arms (62) are pressed away from each other, and which, in the passive position of the expansion device (60), does not touch the two gripper arms (62) and does not exert a force on the gripper arms (62).

7. Automated analyzer (1) according to Claim 6, wherein the expansion head (63) has, on the tapering flanks of the expansion head (63), one or more rollers or balls that are mounted rotatably about a horizontal axis in each case.

## Revendications

1. Appareil (1) d'analyse automatique, comprenant un premier et un deuxième systèmes (5, 15) de réception ayant chacun une pluralité de positions (4, 14) de réception de récipients à liquide et un système, fixé à un bras (10) de transfert pouvant être déplacé automatiquement, pour transférer un récipient à liquide d'une position (4) de réception sur le premier système (5) de réception à une position (14) de réception sur le deuxième système (15) de réception, le système pour le transfert d'un récipient à liquide comprenant un préhenseur (11) passif à pince ayant deux jambes (52, 62) de préhenseur entre lesquelles un récipient à liquide peut être serré par un déplacement horizontal du préhenseur (11) et dans lequel le préhenseur (11) à pince comprend, en outre, un système (50, 60) d'écartement, qui peut être commandé et qui, dans une position active, applique une force aux jambes (52, 62) du préhenseur de manière à repousser les jambes (52, 62) du préhenseur l'une de l'autre et qui, dans une position passive, n'applique pas de force aux jambes (52, 62) du préhenseur, **caractérisé en ce que** l'appareil (1) d'analyse automatique comprend, en outre, un système de commande configuré de manière à commander un procédé ayant les stades suivants :
• contrôle du point de savoir si le récipient de liquide à transférer contient un volume de liquide ou est vide; et
a) s'il est constaté que le récipient à liquide à transférer est vide, le transfert s'effectue de la manière suivante :
i) déplacement horizontal du système de transfert pour produire un serrage entre le préhenseur (11) à pince et le récipient à liquide dans la position (4) de réception du premier système (5) de réception;
ii) soulèvement du système de transfert pour prélever le récipient à liquide de la position (4) de réception;
iii) déplacement horizontal du système de transfert sur une position (14) de réception du deuxième système (15) de réception;
iv) abaissement du système de transfert pour mettre le récipient à liquide en position dans la position (14) de réception du deuxième système (15) de réception; et
v) déplacement horizontal du système de transfert pour faire cesser le serrage:
dans lequel, pendant les stades a)i) à a)v), le dispositif d'écartement se trouve exclusivement dans la position passive; et
b) s'il est constaté que le récipient à liquide à transférer continent un volume de liquide, le transfert s'effectue de la manière suivante :
i) déplacement horizontal du système de transfert pour produire un serrage entre le préhenseur (11) à pince et le récipient à liquide dans la position (4) de réception du premier système (5) de réception, dans lequel, avant la production du serrage entre le préhenseur (11) à pince et le récipient à liquide, le dispositif (50, 60) d'écartement est mis dans la position active, de manière à ce qu'il applique une force aux jambes (52, 62) du préhenseur et à ce qu'il repousse l'une de l'autre les jambes (52, 62) du préhenseur;
ii) soulèvement du système de transfert pour prélever le récipient à liquide de la position (4) de réception, dans lequel, avant le soulèvement du système de transfert, le système (50, 60) d'écartement est mis dans la position passive de manière à ce qu'il n'applique pas de force aux jambes (52, 62) du préhenseur;
iii) déplacement horizontal du système de transfert à une position (14) de réception du deuxième système (15) de réception;
iv) abaissement du système de transfert pour mettre le récipient à liquide en position dans la position (14) de réception du deuxième système (15) de réception; et
v) déplacement horizontal du système de transfert pour faire cesser le serrage, dans lequel, avant le déplacement horizontal du système de transfert pour faire cesser le serrage, le dispositif (50, 60) d'écartement est mis dans la position active de sorte qu'il applique une force aux jambes (52, 62) du préhenseur et qu'il repousse l'une de l'autre les jambes (52, 62) du préhenseur.

2. Appareil (1) d'analyse automatique suivant la revendication 1, dans lequel le dispositif (50) d'écartement comprend un arbre (51) d'entraînement, qui pénètre verticalement entre les deux jambes (52) du préhenseur (11) et à l'extrémité duquel est prévu une tête (53) d'écartement en forme de tige, qui, dans la position active du dispositif (50) d'écartement est mise, par rapport aux deux jambes (52) du préhenseur, transversalement et applique ainsi une force de pression aux jambes (52) du préhenseur de sorte que les jambes (52) du préhenseur sont repoussées l'une de l'autre et qui, en la position passive du système (50) d'écartement, est mise longitudinalement par rapport aux deux jambes (52) du préhenseur et n'applique pas de force aux jambes (52) du préhenseur.

3. Appareil d'analyse automatique suivant la revendication 2, dans lequel la tête (53) d'écartement est reliée par un élément (54) de liaison au bout de l'arbre (51) d'entraînement.

4. Appareil (1) d'analyse automatique suivant l'une des revendications 2 et 3, dans lequel la tête (53) d'écartement a, à ses deux extrémités, respectivement un galet (55) ou une bille montée tournante autour d'un axe vertical.

5. Appareil (1) d'analyse automatique suivant l'une des revendications 2 à 4, dans lequel l'arbre (51) d'entraînement fait partie d'un actionneur.

6. Appareil (1) d'analyse automatique suivant la revendication 1, dans lequel le dispositif (60) d'écartement comprend un barreau, qui peut être inséré verticalement entre les deux jambes (62) du préhenseur (11) et à l'extrémité duquel est prévu une tête (63) d'écartement en forme de cône, qui, dans la position active du système (60) d'écartement, pénètre si profondément entre les jambes (62) du préhenseur qu'elle applique une force de pression aux faces intérieures des jambes (62) du préhenseur de manière à repousser l'une de l'autre les jambes (62) du préhenseur et qui, en la position passive du système (60) d'écartement, ne touche pas les deux jambes (62) du préhenseur et n'applique pas de force aux jambes (62) du préhenseur.

7. Appareil (1) d'analyse automatique suivant la revendication 6, dans lequel la tête (63) d'écartement a, sur les flancs se rétrécissant de la tête (63) d'écartement, un ou plusieurs galets ou billes montés tournants autour respectivement d'un axe horizontal.
